# EUROPEAN PATENT APPLICATION

(11) **EP 4 287 105 A1**
(43) Date of publication of application: **06.12.2023**
(21) Application number: 22745980.7
(22) Date of filing: 27.01.2022
(51) Int. Cl.: G06Q 50/08, G06T 7/00, G06T 7/20

(54) **MANAGEMENT SYSTEM, EVALUATION SYSTEM, AND PERSONNEL TRAINING METHOD**

(30) Priority: 29.01.2021 JP 2021012732
(71) Applicant: DXB Co., Ltd., Kitakyushu-shi, Fukuoka 802-0064 (JP)
(72) Inventor: YOSHIE, Osamu, Kitakyushu-shi, Fukuoka 804-0061 (JP); KOMORITA, Junko, Kitakyushu-shi, Fukuoka 802-0064 (JP)
(74) Representative: TBK
(86) International application number: PCT/JP2022/003110
(87) International publication number: WO 2022/163761

(57) **Abstract**

To provide a system more suitable for a building/construction workplace, configured to identify management items such as danger items or the like, so as to allow a site manager to perform more appropriate site management.

A management system 1 is configured to identify a management item to be managed in a space through which multiple workers move, and to report the management item to a manager that manages a situation in the space. The management system 1 includes: a worker feature detecting module and a worker feature amount extracting module configured to detect positions of feature points that can be used to identify behavior of each of the multiple workers, and to track change in the positions; a behavior analyzing database configured to convert the change in position of the feature points thus tracked into behavior of each of the multiple workers, and to store this information as behavior information for learning data by machine learning; and a worker irregular behavior determining module configured to judge whether or not a change in position of the feature points is irregular behavior of a worker, based on the behavior information stored in the behavior analyzing database, so as to identify the management item. An AR module displays the management item identified by the identifying unit by displaying a virtual tag on a map representing the space, so as to report to the manager.

## Description

### Technical Field

The present invention relates to a management system, an evaluation system, and a personnel training system, and more particularly relates to a management system that is capable of identifying management items that should be managed in a space through which multiple workers move, and reporting the management items to a manager that remotely manages the situation in this space.

### Background Art

At a building/construction site, subcontractors, and sub-subcontractors, who are specialty contractors (workers), proceed with work under a contractor who is a site manager. Typically, the site manager has authority and responsibility over processes, safety, quality and costs, the specialty contractors have responsibility over their work category, and the site manager has authority over costs. Currently, both face a severe shortage of human resources. Specialty contractors are workers, spanning 29 types of construction industries. There are many people coming and going at a site, the level of knowledge and skill of the workers greatly depends on experience, and there is in fact a disparity in level among workers. This disparity in level and other factors can lead to accidents such as injuries and so forth.

The site manager of the contractor has a role of managing the site so that such accidents do not occur. That is to say, ideally, the site manager has authority and responsibility, and must have enough knowledge regarding the subcontracting specialty contractors. However, accumulating such experience takes many years. In a case in which a site manager giving instructions or the like is young or is female, a subcontracting middle-aged or older male worker who is highly experienced and generally is considered to have a high level of skill-related knowledge may be dissatisfied with the instructions, due to the worker's mindset, and differences in age, gender, and so forth. In such cases, in a situation that needs to be promptly handled at the site, objectively judging what should be the standard regarding the appropriateness of the instructions is not easy. In many cases, the voice of the worker carries farther, and the site manager ends up being influenced and swayed by the opinion of the worker. It is difficult to build a trust relationship between the site manager of the contractor and the subcontracting specialty contractors (workers).

The current building/construction industry has problems as described above. However, accidents and the like should be avoided. Several technologies regarding warning of danger have been proposed, though not as many as those for the manufacturing workplace. For example, Patent document 1 discloses a framework in which a worker wears a wearable computer configured to measure states of a work environment and the worker, and to issue warnings based on the work environment (danger items, etc.) and the state of the worker. This has been further developed into a proposal in which artificial intelligence (AI) is used to learn the movement (behavior) of people, and images of the site, and to issue warnings based on the images of the site and so forth (see Patent document 2).

On the other hand, the development of AR (augmented reality) technology in recent years has been remarkable, and putting AR technology to use in the building/construction workplace is also being proposed (see Patent document 3).

### Citation List

### Patent Literature

[Patent document 1]
   Japanese Unexamined Patent Application Publication No. 2002-287846
[Patent document 2]
   Japanese Unexamined Patent Application Publication No. 2019-197373
[Patent document 3]
   US Patent No. 10,607,163

### Summary of Invention

### Problem to be solved

However, as a first problem, there is a major difference in changes in on-site environments between manufacturing workplaces and building/construction workplaces. Typically, in manufacturing workplaces such as factories and the like, only small changes occur in the state of equipment and so forth except for the workers, and basically the same people access the manufacturing workplaces. That is to say, manufacturing workplaces can be regarded as static closed spaces. In contrast, building/construction workplaces are outdoor sites, and different people come and go at the site every day as described above. That is to say, building/construction workplaces are open and dynamic spaces. From these viewpoints, there is a large difference between them. In particular, building workplaces require a large number of various kinds of specialized techniques as compared to construction (civil engineering). In contrast, construction (civil engineering) requires a relatively small number of specialized techniques, and accordingly, AR can be easily applied to construction (civil engineering). From the viewpoint of the coming and going of people, building workplaces can be regarded as the most open and dynamic spaces. Accordingly, the technology employed in manufacturing workplaces cannot be simply applied to building/construction workplaces, and particularly to building workplaces.

Furthermore, building/construction workplaces in such a state as described above currently face a severe shortage of human resources. Furthermore, handing down skills to the next generation is becoming a problem among aging specialty contractors. In addition, handing down skills to the next generation is also becoming a problem on the site management side as well. For such reasons, there is an increasing need to provide a human resource development system. In practice, there are workplace problems for site managers, such as a problem of workers refusing to take instructions, a problem of difficulty in prediction due to insufficient experience, a problem of difficulty in judging words and actions of workers due to insufficient knowledge, a problem of difficulty in communication with workers due to technical terms and jargon, etc. The quality of thought processes and the quality of actions are affected by the quality of human relations. As a result, it is said to require ten years or more for a site manager to be able to do a satisfactory job in management. Furthermore, site managers tend to have a constant sense of isolation, and accordingly, it is difficult for site managers to maintain motivation, which is also a problem.

Such problems described above are known. Conventionally, various kinds of techniques are being proposed for solving problems in the manufacturing workplace in particular. In contrast, only a small number of techniques have been proposed for problems in the building/construction workplace. Also, some techniques employing AR technology have been proposed. However, such techniques are insufficient for handling such a dynamic site in an open space. In particular, such techniques are insufficient as a tool for supporting communication between the site manager and workers and so forth.

Accordingly, the present invention has been made in such a situation. Accordingly, it is a first purpose of the present invention to provide an improved system suitable for the building/construction workplace, configured to identify management items such as danger items, so as to allow a site manager to provide appropriate site management. Furthermore, it is a second purpose of the present invention to provide a system to allow a site manger to issue instructions from a highly experienced viewpoint that will convince workers on the site even if the site manager is young or is female. Furthermore, it is a third purpose of the present invention to provide a human resource evaluation system for appropriately evaluating human resources so as to maintain the motivation of workers and site managers to fulfil their respective roles. Furthermore, it is a fourth purpose of the present invention to provide a human resource training technique for training workers, site managers, and moreover remote managers using the evaluation system.

### Solution of Problem

A first aspect of the present invention relates to a management system configured to identify a management item to be managed in a space through which multiple workers move, and to report the management item to a manager that manages a situation in the space. The management system includes: a tracking unit configured to detect a position of a feature point to be used to identify a behavior of each of the multiple workers, and to track a change in the position; a storage unit configured to convert the change in position of the feature point tracked by the tracking unit into behavior of each of the multiple workers, and to store it as behavior information for learning data to be used by machine learning; an identifying unit configured to judge whether or not the change in position of the feature point tracked by the tracking unit is due to irregular behavior of a worker, based on the behavior information stored by the storage unit, and to identify the management item; and a reporting unit configured to display the management item identified by the identifying unit on a map representing the space, so as to report the management item to the manager. Here, irregular behavior of the worker means an evasive action taken for avoiding danger.

A second aspect of the present invention relates to the first aspect. In the second aspect, personal information of each of the workers is associated with the feature points.

A third aspect of the present invention relates to the first or second aspect. The manager includes both a site manager who is in the space where the multiple workers are, and a remote manager who is away from the space. The reporting unit shows the management item to both the site manager and the remote manager so as to report to them.

A fourth aspect of the present invention relates to the third aspect. The management item to be managed is tagged under agreement by the site manager and the remote manager, and the tag thus applied can be deleted under agreement by the site manager and the remote manager. The management system further includes a sharing unit that allows the site manager and the remote manager to share management index information indicating a management index expressed by the number of tags thus applied, the number of tags thus deleted, or an increase/decrease in the tags.

A fifth aspect of the present invention relates to an evaluation system. The evaluation system includes: the management system according to the fourth aspect; and an evaluating unit configured to evaluate the multiple workers and the site manager based on comparison between actual actions and standard actions required by a standard process.

A sixth aspect of the present invention relates to a personnel training method provided with the evaluation system according to the fifth aspect. The personnel training method is configured to support personnel training through bridging a gap in experience between each of the multiple workers and the site manager.

### Advantageous Effects of Invention

With the present invention, this is capable of identifying management items such as danger items so as to allow site managers to provide more appropriate site management for building/construction sites. Furthermore, this allows a site manager to issue instructions from a highly experienced viewpoint that will convince workers on the site even if the site manager is young or is female. Furthermore, this allows an evaluation system to be developed, thereby appropriately allowing workers and site managers to be evaluated using appropriate site management. Furthermore, this allows training of human resources such as workers, site managers, and remote managers to be promoted using an appropriate evaluation system.

### Brief Description of Drawings

Fig. 1 is a block diagram showing an overall configuration of a management system according to an embodiment of the present invention.
Fig. 2 is a diagram showing a relation between a site management terminal, a remote management terminal, an AI application, and an AR application, shown in Fig. 1.
Fig. 3 is a block diagram showing an internal configuration of the site management terminal shown in Fig. 1.
Fig. 4 is a diagram showing a tablet as a specific example of the site management terminal (hardware function configuration) shown in Fig. 3.
Fig. 5 is a block diagram showing an internal configuration of the remote management terminal shown in Fig. 1.
Fig. 6 is a block diagram showing a relation between the site management terminal, a critical control point manual server, and a remote management terminal, shown in Fig. 1, and is a diagram for explaining a knowledge-based AI application from among the AI applications shown in Fig. 2, from the viewpoint of a critical control point manual.
Fig. 7 is a block diagram showing a relation between the site management terminal and a word list server shown in Fig. 1, and is a diagram for explaining a knowledge-based AI application from among the AI applications shown in Fig. 2, from the viewpoint of a word dictionary.
Fig. 8 is a flowchart showing processing of matching a site and drawing and position data.
Fig. 9 is a diagram for explaining a situation at a site.
Fig. 10 is a diagram showing a situation in which the AR data of a three-dimensional space is tagged after it has been acquired by capturing images of an actual site by means of the site management terminal shown in Fig. 3.
Fig. 11 is a diagram showing a part of a data-driven AI application and a portion relating to an AR application extracted from the configuration shown in Fig. 2.
Fig. 12 is a flowchart showing sensing processing of irregular behavior of a worker.
Fig. 13 is a first diagram for explaining sensing of irregular behavior of the worker in the processing shown in Fig. 12, and is a diagram showing bounding boxes (head and entire body).
Fig. 14 is a second diagram for explaining detection of irregular behavior (relative position change of feature amounts) of the worker in the processing shown in Fig. 12, and is a diagram showing a "figure" and a "ground" of the bounding box of the head.
Fig. 15 is a third diagram for explaining detection of irregular behavior (relative speed change of feature points) of the worker in the processing in Fig. 12, and is a diagram showing the displacement amount over time in the bounding box of the head.
Fig. 16 is a fourth diagram for explaining detection of irregular behavior (relative position change of feature amounts) of the worker in the processing in Fig. 12, and is a diagram showing a "figure" and a "ground" of the bounding box of the entire body in addition to the head.
Fig. 17 is a fifth diagram for explaining detection of irregular behavior (relative speed change of feature points) of the worker in the processing in Fig. 12, and is a diagram showing the displacement amount over time in the bounding box of the entire body in addition to the head.
Fig. 18 is a diagram for explaining detection of a safe carry-in route based on movement paths of feature points using humans as sensors.
Fig. 19 is a diagram for explaining worker attribute information accumulation based on movement paths of feature points;
Fig. 20 is a diagram for explaining judgment made by a semantic segmentation unit in Fig. 1 and Fig. 2;
Fig. 21 is a diagram showing a processing flow of the overall system of the management system in Fig. 2.
Fig. 22 is a block diagram for explaining communication functions with respect to the AR module shown in Fig. 2.

### Description of Embodiments

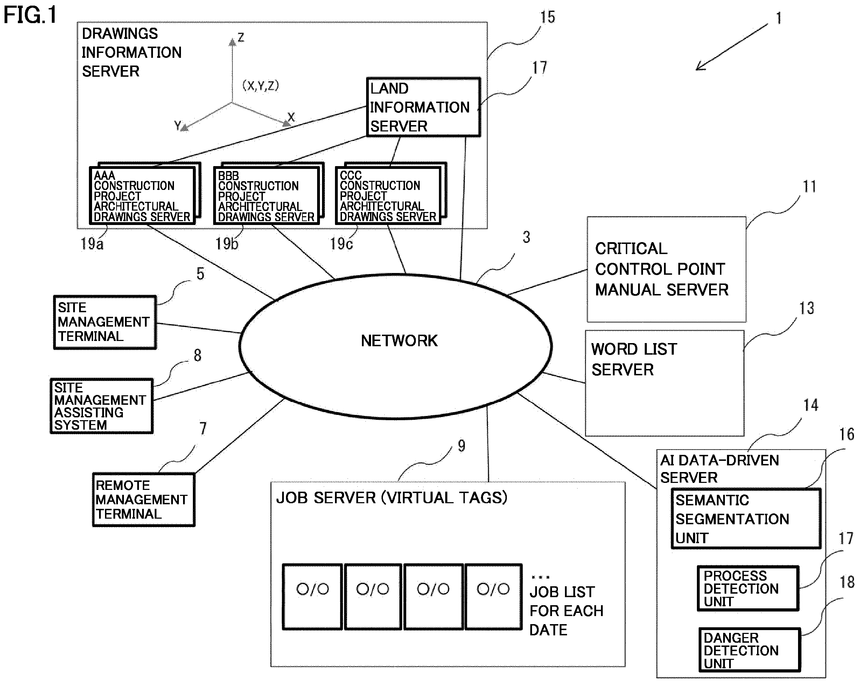

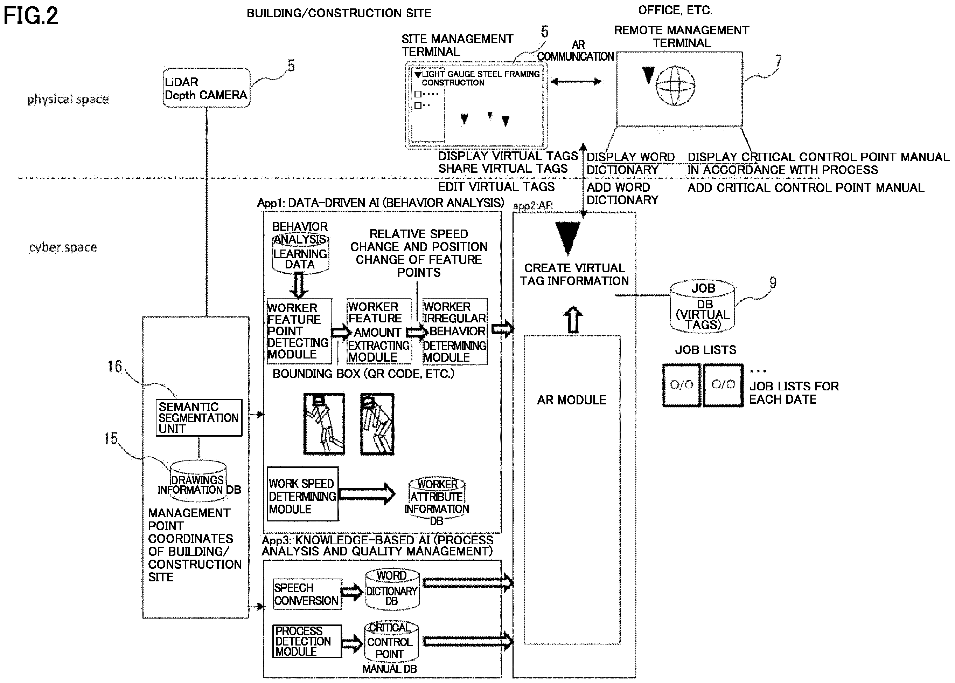

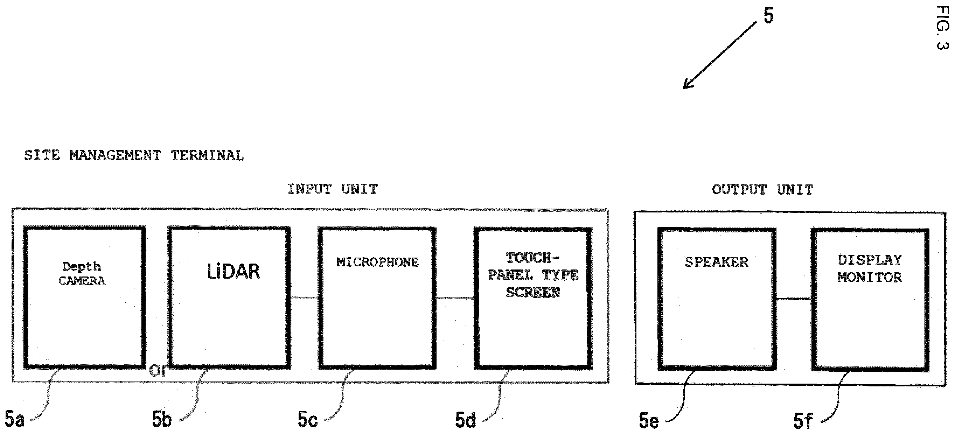

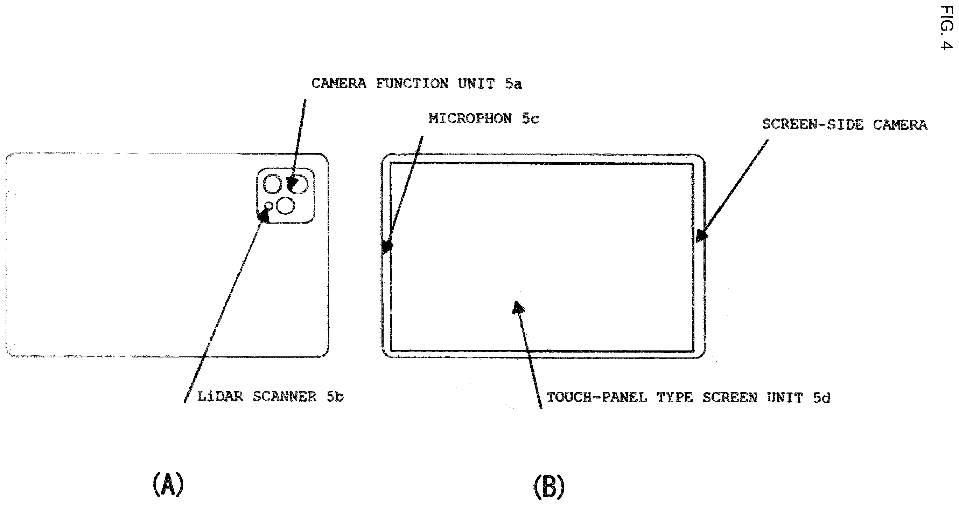

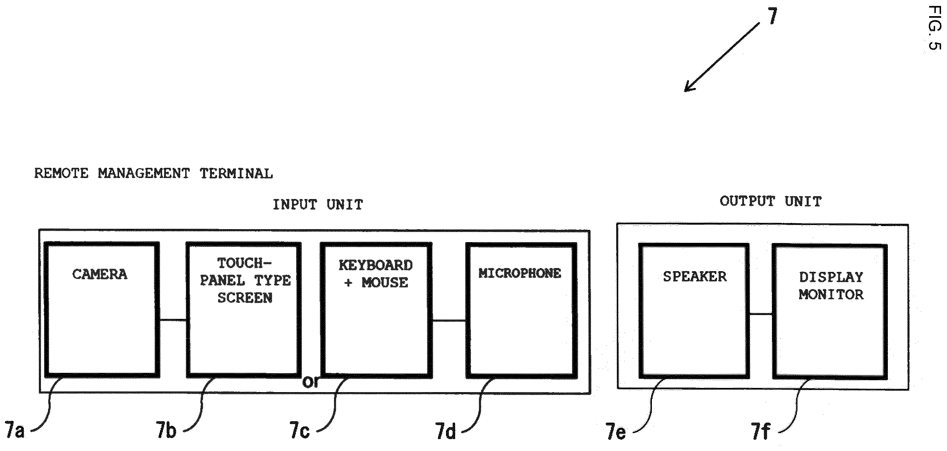

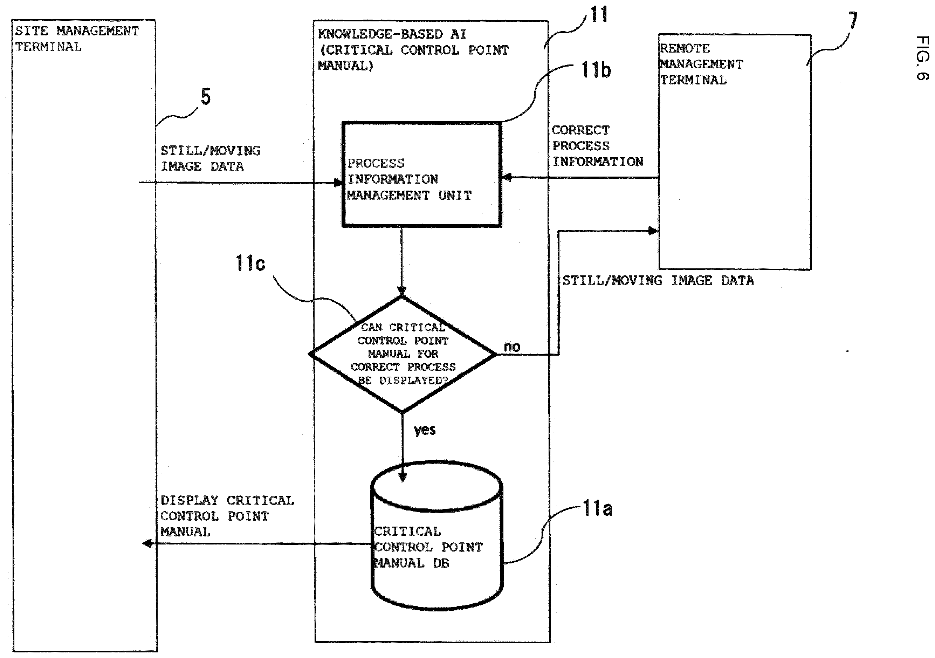

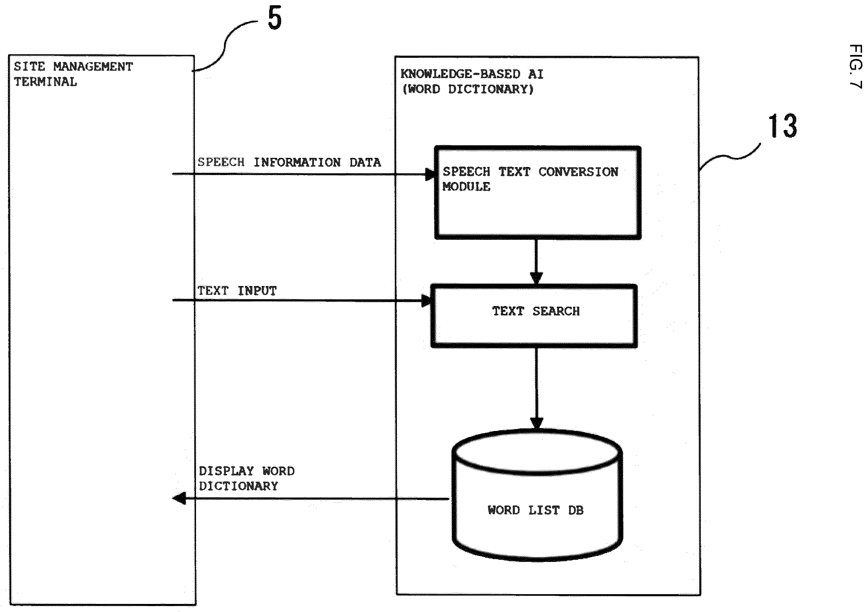

Fig. 1 is a block diagram showing an overall configuration of a management system according to an embodiment of the present invention. Fig. 2 is a diagram showing a relation between a site management terminal, a remote management terminal, an AI application, and an AR application in Fig. 1. Fig. 3 is a block diagram showing an internal configuration of a site management terminal in Fig. 1. Fig. 4 is a diagram showing a tablet as a specific example of a site management terminal (hardware function configuration) in Fig. 3. Fig. 5 is a block diagram showing an internal configuration of a remote management terminal in Fig. 1. Fig. 6 is a block diagram showing a relation between the site management terminal, a critical control point manual server, and a remote management terminal shown in Fig. 1, and is a diagram for explaining a knowledge-based AI application which is an example of the AI application shown in Fig. 2 from the viewpoint of a critical control point manual. Fig. 7 is a block diagram showing a relation between the site management terminal and a word list server shown in Fig. 1, and is a diagram for explaining a knowledge-based AI application which is an example of the AI application shown in Fig. 2 from the viewpoint of a word dictionary.

Referring to Fig. 1, a management system 1 includes a site management terminal 5, a remote management terminal 7, a site management assisting system 8, a job server 9, a critical control point manual server 11, a word list server 13, an AI data-driven server 14, and a drawing information server 15, which are connected via an information communication network 3. The site management terminal 5 and the remote management terminal 7 each mount an application described later. Furthermore, the job server 9, the critical control point manual server 11, the word list server 13, and the drawing information server 15 each store data so as to function as a data server. The site management assisting system 8 is a mobile communication device such as a dog-like robot or the like, for example, and is configured as a site management assistance system. The AI data-driven server 14 includes a semantic segmentation unit 16, a process detection unit 17, and a danger detection unit 18.

The site management terminal 5 is held by a site manager who is on-site with workers, and is configured including an input unit and an output unit, as shown in Fig. 3. The input unit includes a depth camera 5a, a LiDAR (Light Detection And Ranging) unit 5b, a microphone 5c, and a touch-panel type screen unit 5d. At least one from among the depth camera 5a and the LiDAR (Light Detection And Ranging) unit 5b may preferably be provided. Also, both of them may be provided. The output unit includes a speaker 5e and a display monitor 5f. The LiDAR unit 5b is a sensor using photosensor techniques configured to scan and irradiate laser light to objects, and measures scattered light and reflected light from the objects, so as to measure the distance to each object and to identify the nature of each object. Specific examples of the site management terminal 5 include a tablet terminal (see Fig. 4). It should be noted that Fig. 4 shows a scanner employing the depth camera 5a and the LiDAR unit 5b, as shown in Fig. 4A. Fig. 4B shows the touch-panel type screen unit 5d, and also shows the microphone 5c and a screen-side camera. It should be noted that the speaker 5e shown in Fig. 3 is configured as a built-in component, and accordingly is not shown in Fig. 4.

The remote management terminal 7 is remotely used by a remote manager away from the site, who is more experienced and knowledgeable than the site manager. The remote management terminal 7 is structured to include an input unit and an output unit, as shown in Fig. 5. The input unit includes a camera 7a, a touch-panel type screen unit 7b, a keyboard + mouse 7c, and a microphone 7d. At least one from among the touch-panel type screen unit 7b and the keyboard + mouse 7c may preferably be provided. Also, both of them may be provided. The output unit includes a speaker 7e and a display monitor 7f. Specific examples of the remote management terminal 7 include a laptop personal computer and a desktop personal computer.

The job server 9 stores data of job lists for each date.

Description will be made with reference to Fig. 2 regarding the overall configuration shown in Fig. 1 separated into real space ("physical space") and virtual space ("cyber space"). In particular, description will be made regarding applications in the cyber space. The site management terminal 5 including the tablet terminal, LiDAR unit, and the depth camera, and the remote management terminal 7 including the personal computer, are provided in the physical space. It should be noted that Fig. 2 shows an arrangement in which the LiDAR unit and the depth camera are configured as components separate from the tablet terminal. Also, as shown in Fig. 3, they may be configured as a single component. With such an arrangement, AR communication is supported between the site management terminal 5 and the remote management terminal 7. On the other hand, in the cyber space, in addition to data servers such as a job DB 9, a drawing information DB 15, a critical control point manual DB 11, and a word dictionary DB 13, the semantic segmentation unit 16 is also provided. It should be noted that this semantic segmentation is a deep learning algorithm that associates all pixels in an image with tags (labels) and categories. Specifically, this supports accurate tagging (labeling) of objects in images by referencing drawing information of building/construction sites. In Fig. 2, each tag is indicated by a downward-pointing triangle. Applications include a data-driven AI application appl, an AR application app 2, and a knowledge-based AI application app3. The data-driven AI application app1 is an application that performs behavior analysis of workers, and specifically is an application that performs behavior analysis by focusing on relative speed change and positional change of feature points and feature amounts. The data-driven AI application app1 includes a module portion (example of means structured to be tracking means) that detects feature points (parts) of workers based on behavior analysis learning data (example of storage means), a module portion (example of means structured to be tracking means) that extracts feature amounts of workers, a module portion (example of identifying means) that determines irregular behavior of workers, and a work speed determining module portion. The data-driven AI application app1 identifies a place where irregular behavior of a worker has been detected, based on results of this semantic segmentation unit 16. The knowledge-based AI application app3 performs process analysis and quality management using data stored in the critical control point manual server 11 and the word list server 13. The knowledge-based AI application app3 is configured including a process detection module portion for analyzing processes shown in Fig. 6, and a speech conversion portion relating to the word dictionary shown in Fig. 7. The knowledge-based AI application app3 performs detection with respect to the current process based on the results of the semantic segmentation unit 16. The AR application app 2 is configured including a module portion (example of reporting means) for displaying and so forth of later-described virtual tag information on the site management terminal 5 and the remote management terminal 7, which are not shown in Fig. 1. It is a first purpose of the arrangement shown in Fig. 2 to provide a knowledge-based AI configured to allow people to have consideration and to share their knowledge, in order to activate communication among people and improve the quality of mutual relations, which had not been taken into consideration heretofore. Also, it is another purpose thereof to provide integration of such a knowledge-based AI with a data-driven AI using sensors based on human sensitivity. In addition, it is yet another purpose thereof to provide activated communication between site managers with little experience and remote managers who are highly experienced, using the AR based on the integrated results, thereby developing personnel evaluation and personnel training described later.

As shown in Fig. 6, the critical control point manual server 11 includes a database (DB) 11a that stores information of manuals with respect to the critical control points to be referred to by the site manager when the site manager makes use of assistance from a remote manager. Furthermore, the knowledge-based AI includes a process information management unit 11b and a distinguishing unit 11c. The information in manuals regarding critical control points includes a great many critical control points, such as prediction of dangers that have a likelihood of leading to accidents, quality control, confirmation of lot location, confirmation of legal regulations, confirmation of lot conditions, and so forth. Description will be made below regarding the relation among the site management terminal 5, the critical control point manual server 11, and the remote management terminal 7. Still/moving image data that has been captured by the depth camera 5a is transmitted to the knowledge-based AI from the site management terminal 5. The process information management unit 11b instructs the distinguishing unit 11c to judge whether a critical control point manual for the correct process can be displayed, in order to manage the still/moving image data thus transmitted in a form associated with the process information that is thought to be correct, and which has been transmitted from the remote management terminal 7. This judgment is performed with regard to whether or not the still/moving image data corresponds to the correct process. In a case of judging that the critical control point manual can be displayed, the critical control point manual database (DB) 11a supplies the critical control point manual associated with the correct process information to the site management terminal 5, so as to allow the site manager to refer to the critical control point manual thus displayed. Conversely, in a case in which the distinguishing unit 11c judges that such display cannot be performed, the still/moving image data is also supplied to the remote management terminal 7. Subsequently, more correct process information is transmitted from the remote management terminal 7 to the process information management unit 11b by a highly experienced remote manager, and judgment is made with regard to whether a more correct process can be displayed. As described above, this allows the site manager to confirm correct process information more suitable for the site based on the still/moving image data. Furthermore, such an arrangement is configured to display the critical control point manual associated with the still/moving image data via the site management terminal 5.

The word list server 13 stores information with respect to technical words such as architectural terms used on-site in the form of a list. As shown in Fig. 7, words conveyed through the microphone 5c of the site management terminal 5 are input to the knowledge-based AI as speech information, so as to convert the speech data into text data. Subsequently, a word list is extracted from the text data with reference to a word list database (DB). With this, as a result of the word dictionary, the extracted word list is also displayed on the site management terminal 5 as the results of the word dictionary.

The drawing information server 15 in Fig. 1 includes a land information server 17 that stores information relating to the land of the site, and architectural drawing servers 19a, 19b, and 19c provided corresponding to multiple respective construction projects so as to store information with respect to architectural drawings for the respective construction projects. The land information stored in the land information server 17 is three-dimensional information three-dimensionally associated with the information with respect to the architectural drawings stored in the architectural drawing servers 19a, 19b, and 19c. The architectural drawings include both design-side design drawings (blueprints) and construction-side working drawings. Such architectural drawings are necessary for representing the state of the three-dimensional space of the site in a display using AR.

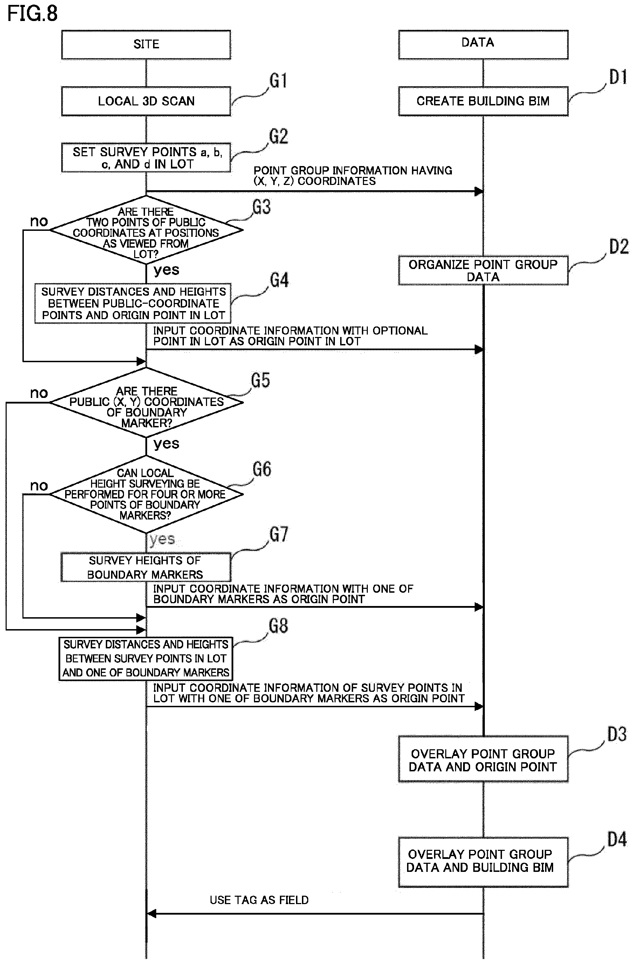

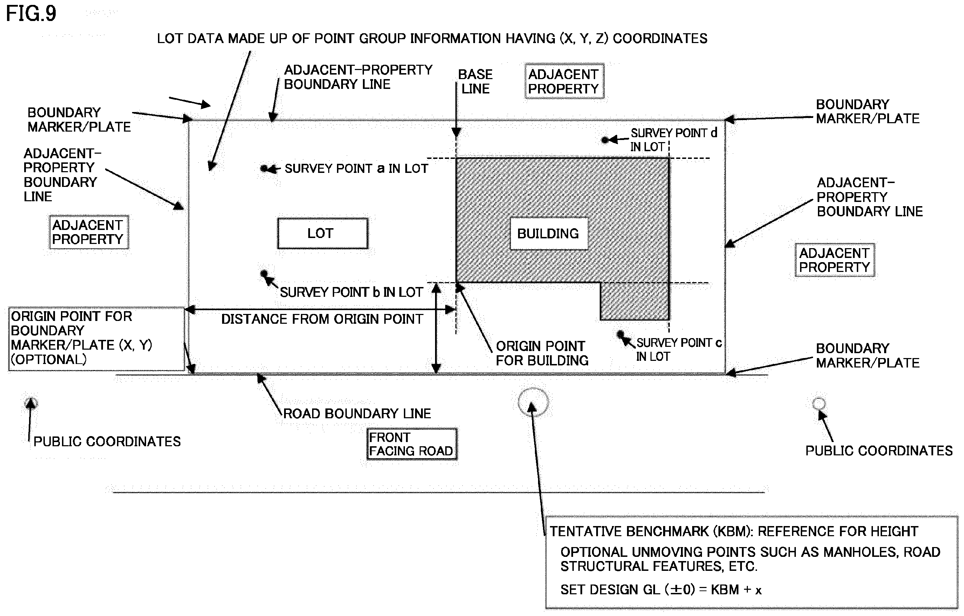

Fig. 8 is a flowchart showing processing of matching a site and drawing and position data. Fig. 9 is a diagram for explaining a situation at a site.

Referring to Fig. 9, first, so-called public coordinates, which also represent the height, are defined for each site. Tentative benchmarks (KBM) are selected as arbitrary unmoving points such as manholes, road structural features, and so forth, using the public coordinates. A building site includes a lot portion and a building portion, with survey points a, b, c, and d set in the lot. Also, a building site has at least a road boundary line between it and a front-facing road. Furthermore, the building site is sectioned from adjacent properties by adjacent-property boundary lines. Boundary markers/plates can be employed as arbitrary origin points on a plane (X, Y). For example, as shown in Fig. 9, with a boundary marker/plate at the lower left as the origin point on a plane (X, Y), by obtaining the distance from the origin point on the plane (X, Y) to the building, this also determines the relationship with the origin point of the building. As described above, the building site shown in Fig. 9 is represented by data made up of a point group of (X, Y, Z) coordinates including height coordinates. By performing origin matching and orientation matching, this enables AR expression.

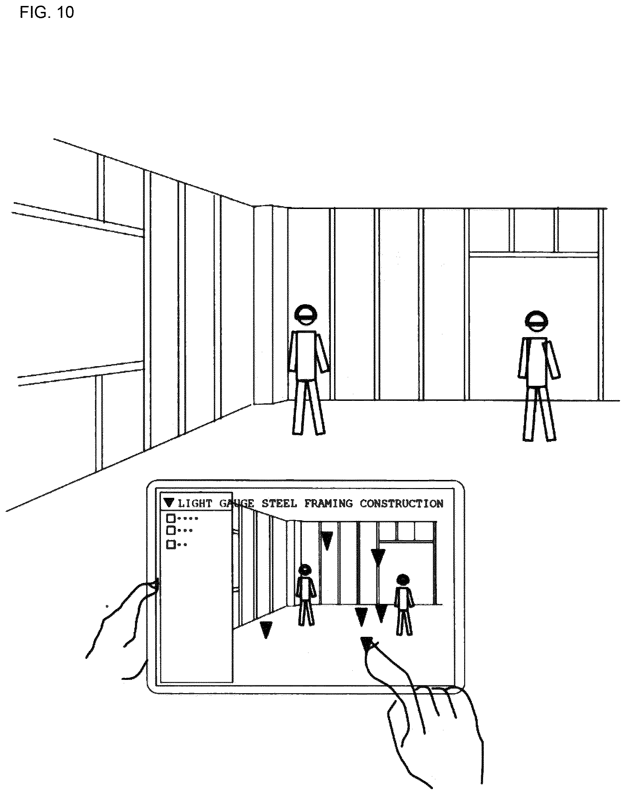

Referring to Fig. 8, in step G1, a local 3D scan is performed on the site side. In step G2, survey points a, b, c, and d are set in the lot. On the data side, in Step D1, building BIM is created. After the survey points a, b, c, and d are set in the lot in Step G2, point group information having (X, Y, Z) coordinates is supplied from the site side to the data side, thereby providing a state in which the three-dimensional space of the building site can be represented by point group data. After such preconditions are satisfied, in Step D2 on the data side, point group data is organized. Furthermore, in Step G3 on the site side, judgement is made with regard to whether or not there are two public-coordinate points as viewed from positions within the lot. When there are such two public-coordinate points, the flow proceeds to Step G4, and distances and heights between the public points and the origin point in the lot are surveyed. Subsequently, the coordinate information is input to the data side based on information received from the site side with an arbitrary point within the site as an origin point in the lot. Conversely, if there are no such two public-coordinate points, the flow proceeds to step G5, and judgment is made regarding whether or not there are public (X, Y) coordinates applied to a boundary marker. When there are such public (X, Y) coordinates, the flow proceeds to step G6, and judgment is made regarding whether local height surveying can be performed for four or more points of the boundary markers. When the local height surveying can be performed, the flow proceeds to step G7, and the heights of the boundary markers are surveyed. Subsequently, coordinate information is input to the data side with one of the boundary markers as the origin point based on the information from the site side. Conversely, when there are no such two public-coordinate points in step S5, or when the local height surveying can not be performed in step G6, in either case, the flow proceeds to step G8, and distance/height surveying is performed between the survey points in the lot and one from among the boundary markers. Subsequently, the coordinate information with respect to the survey points in the lot is input to the data side with one of the boundary markers as the origin point based on the information from the site side. After the processing up to Step G8 on the site side, in Step D3 on the data side, the point group data thus processed is overlaid on the origin point. Subsequently, in Step D4, the point group data is overlaid on the building BIM. This allows a tag to be used as a field. Fig. 10 shows an example in which such tags are applied to the AR three-dimensional space data obtained by capturing an actual site by means of the site management terminal 5. As with an example shown in Fig. 2, each tag is represented by a downward-pointing triangle. Also, such a tag may be indicated as a balloon-like tag. Also, various kinds of shapes may be employed. Personal information of workers is also listed in these tags. Examples of personal information include information such as height and so forth.

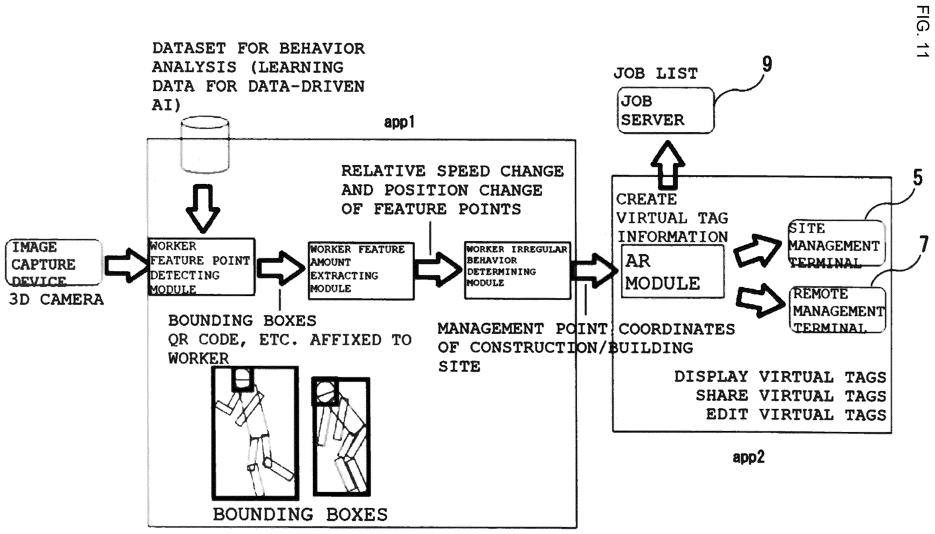

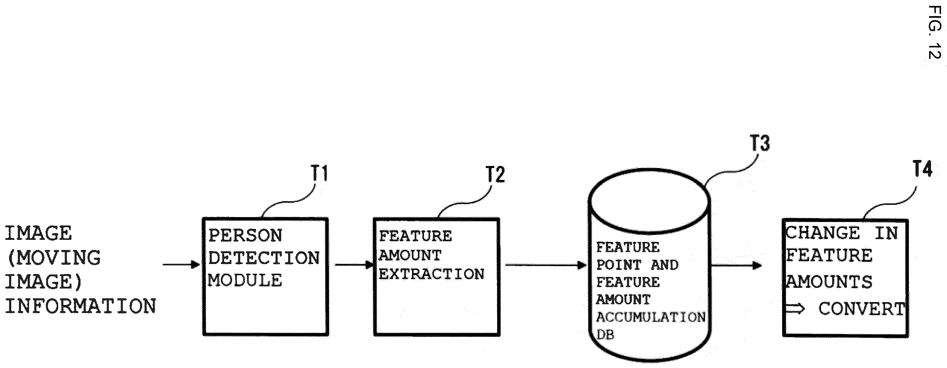

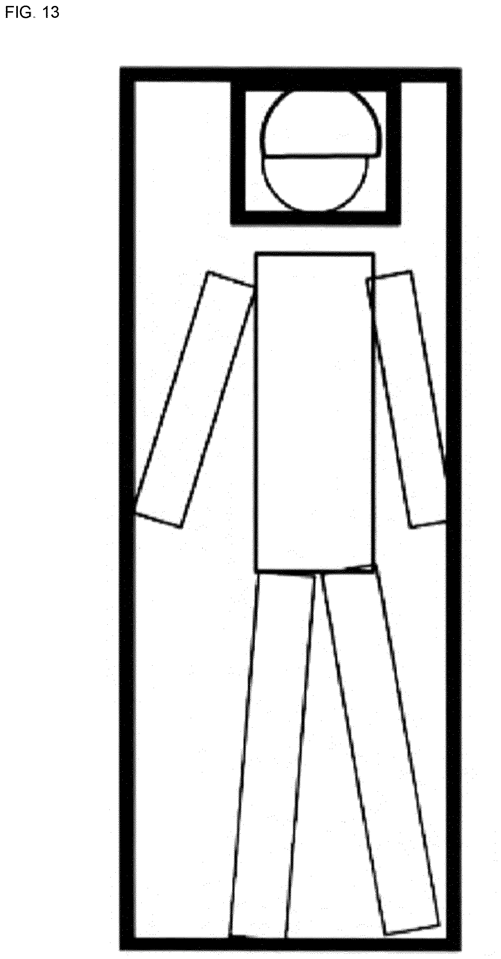

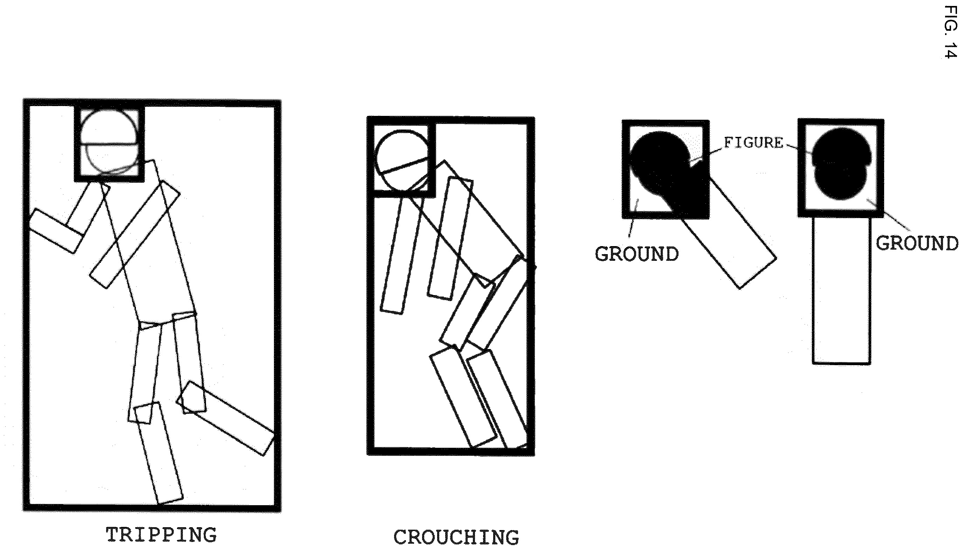

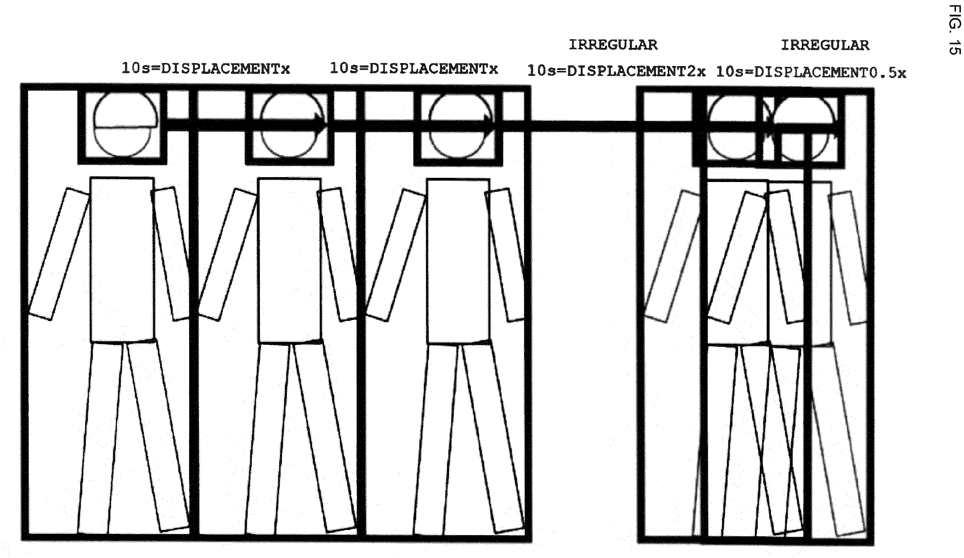

Fig. 11 is a diagram showing a part of the data-driven AI application and a portion relating to an AR application extracted from the configuration shown in Fig. 2. Fig. 12 is a flowchart showing detection processing of irregular behavior of a worker. Fig. 13 is a first diagram for explaining detection of irregular behavior of the worker in the processing in Fig. 12, and is a diagram showing bounding boxes (head and entire body). Fig. 14 is a second diagram for explaining detection of irregular behavior (relative position change of feature points) of the worker in the processing in Fig. 12, and is a diagram showing the "figure" and "ground" of the bounding box of the head. Fig. 15 is a third diagram for explaining detection of irregular behavior (relative speed change of feature points) of the worker in the processing in Fig. 12, and is a diagram showing the displacement amount of the bounding box of the head over time.

Referring to Fig. 11 and Fig. 12, still/moving image information captured by the depth camera 5a of the site management terminal 5 is input to a worker feature detecting module (person detection module). Subsequently, the worker feature detecting module detects a person with reference to learning data of the data-driven AI configured as a data set to be used for behavior analysis (see step T1). In step T1, a bounding box of the head, such as shown in Fig. 13, is set as a feature point, and person detection is performed by extracting this feature point. It should be noted that the bounding box of the head is an example of a feature point that can be used to identify the behavior of each of multiple workers. Specifically, the feature point may also be represented by a QR code (registered trademark) affixed to helmets of workers, or by a quantity obtained by image analysis and so forth. Next, in Step T2, a feature amount is extracted by the worker feature amount extracting module. The "feature amount" as used here mainly indicates relative position relation information obtained by calculation based on the feature points. Specifically, the "feature amount" indicates the relative position relation between the figure and the ground obtained by performing difference calculation between temporally adjacent images (frames) within the bounding box described later. The extracted feature points and feature amounts are accumulated in a feature point and feature amount accumulation database (DB) (see step T3). This data accumulation is performed so as to allow the data thus accumulated to be used to detect a temporal change in feature points after the relative position of the head is detected based on the position of a QR code (registered trademark) on the head and so forth. In step T4, the change in feature amounts is converted into behavior of the worker. Furthermore, the worker irregular behavior determining module judges whether or not the converted behavior is irregular behavior based on the balance of behavior shown in Fig. 14 and the rhythm of behavior shown in Fig. 15. With the balance of behavior described here with reference to Fig. 14, when a change is detected in the balance of the "ground" and the "figure" in the bounding box, judgement is made that irregular behavior has occurred. That is to say, irregular behavior can be identified based on a relative positional change in feature points and feature amounts, and includes such specific examples as "tripping" and "crouching". Here, the "figure" indicates a portion or a region of a picture, photograph, or scenery that is visualized as a shape, and the "ground" indicates the background portion that extends behind the figure. Description has been made with reference to Fig. 15 regarding the rhythm. Also, when a change is detected in the displacement amount of the bounding box, judgment is made that irregular behavior has occurred. Irregular behavior can be identified based on a relative speed change of feature points. For example, when the displacement amount in ten-second intervals is x -> x -> 2x -> 0.5x, the displacements "x -> 2x" and "2x -> 0.5x" are each detected as irregular displacement. That is to say, sudden and non-periodic behavior is detected as irregular behavior. By performing such detection, such an arrangement identifies irregular behavior as an example of a danger item where an accident could occur, i.e., an example of an important management item to be managed.

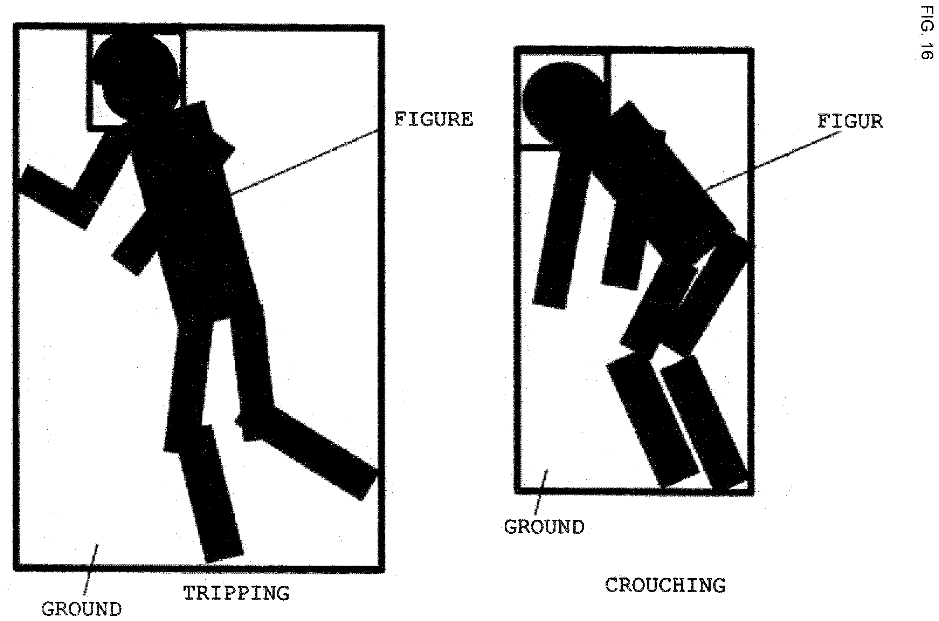

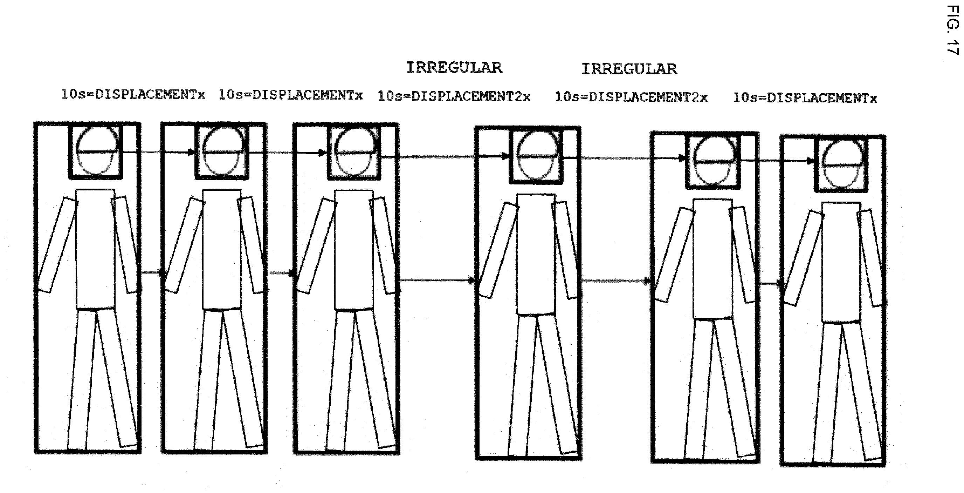

Fig. 16 is a fourth diagram for explaining detection of irregular behavior (relative position change of feature amounts) of the worker in the processing in Fig. 12, and is a diagram showing the "figure" and "ground" of the bounding box of the entire body in addition to the head. Fig. 17 is a fifth diagram for explaining detection of irregular behavior (relative speed change of feature points) of the worker in the processing in Fig. 12, and is a diagram showing the displacement amount over time of the bounding box of the entire body in addition to the head.

Fig. 16 and Fig. 17 each show processing for recognizing the entire body in addition to the head in the bounding box shown in Fig. 13. Such an arrangement is capable of identifying irregular behavior based on the relative positional change of feature points (balance) and based on the relative velocity change of feature points (rhythm) for both the head and the entire body.

It should be noted that description has been made above with reference to Figs. 14 and 15 directing attention to the figure and the ground in the bounding box with respect to the head. Also, description has been made above with reference to Figs. 16 and 17 directing attention to the figures and the ground in the bounding boxes with respect to the head and the entire body. Also, an arrangement may be made directing attention to the bounding box with respect to the entire body. Also, with consideration of implementation, in order to provide light-load and simple processing, judgment of irregular behavior may be made based on the relation between the movement of the head and the movement of the entire body without giving consideration to the figure and the ground, i.e., the relation between the bounding boxes of them. In this case, as the initial learning data, simple data as described above may be employed. Subsequently, as data is accumulated and becomes big data, the big data may be used according to the level of the need for accuracy in detecting the movement required for identifying irregular behavior. Furthermore, as data is accumulated and becomes big data, the outline may be identified with higher accuracy, i.e., the "ground" and "figure" in each bounding box may be distinguished with higher accuracy.

Returning to Fig. 11, the AR application app2 is capable of creating virtual tag information with management point coordinates of the construction/building site as a reference with reference to the job list stored in the job server 9. The virtual tags correspond to the above-described management items. As a result of the creation of the virtual tag information, this allows both the site management terminal 5 and the remote management terminal 7 to perform display of virtual tags, sharing of virtual tags, and editing of virtual tags. Such an arrangement is configured to allow management contents to be tagged by agreement of the site manager and the remote manager. Also, such an arrangement is configured to allow a given previously applied tag to be deleted by agreement of the site manager and the remote manager. For example, as described later, such deletion is performed after a danger is resolved or the like by a worker instructed by the site manager after the danger item was tagged. With this, the AR allows the site manager and the remote manager to share management index information that indicates a management index represented by the number of tags that are applied, the number of tags that are deleted, or the increase/decrease in the tags.

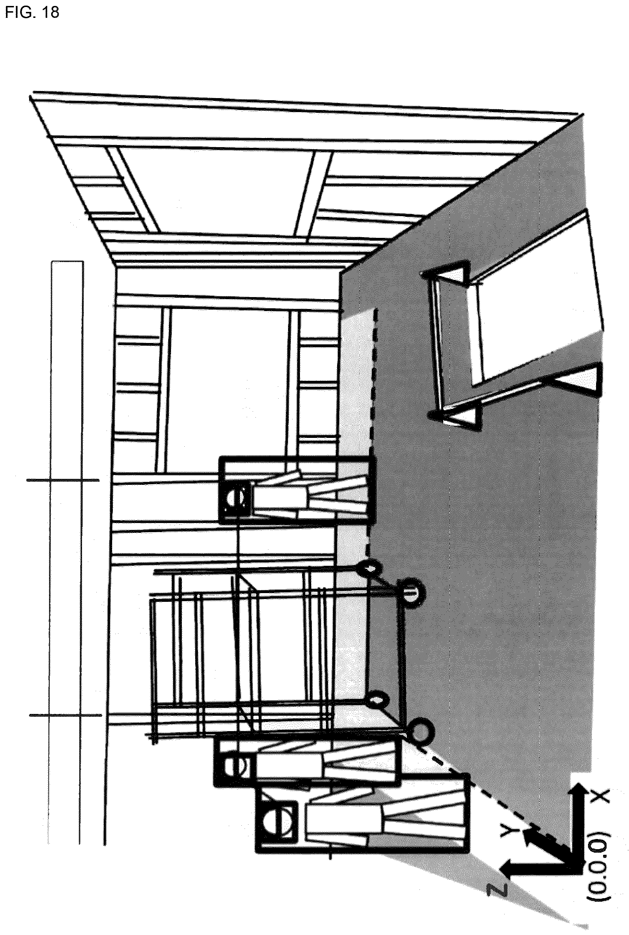

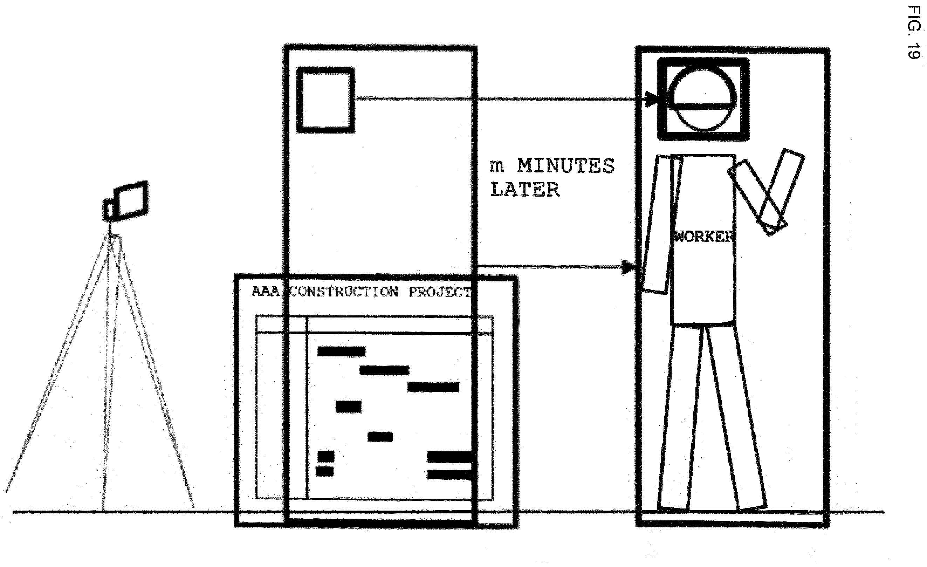

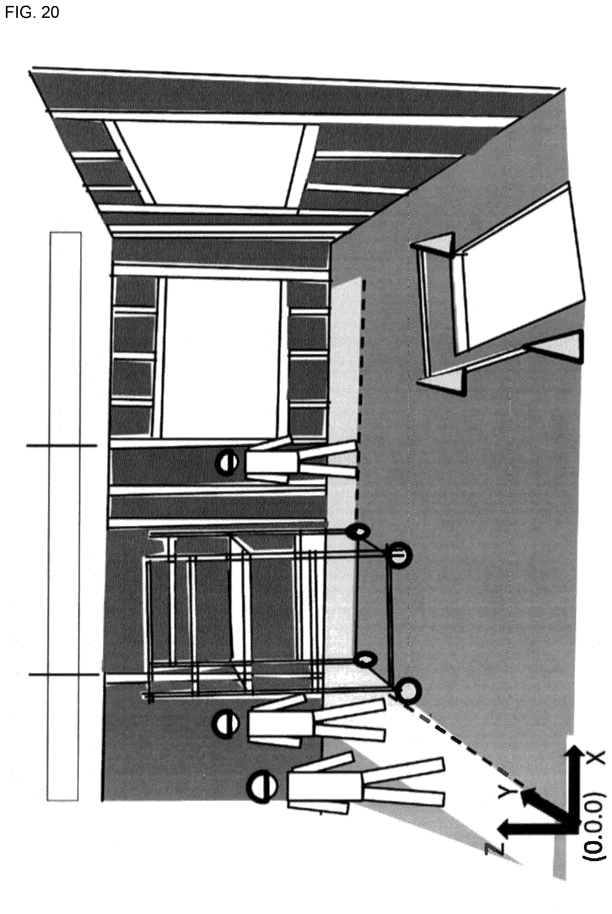

Fig. 18 is a diagram for explaining detection of a safe carry-in route based on the movement paths of feature points with humans as sensors. Fig. 19 is a diagram for explaining worker attribute information accumulation based on movement paths of feature points. Fig. 20 is a diagram for explaining judgement by the semantic segmentation unit in Fig. 1 and Fig. 2.

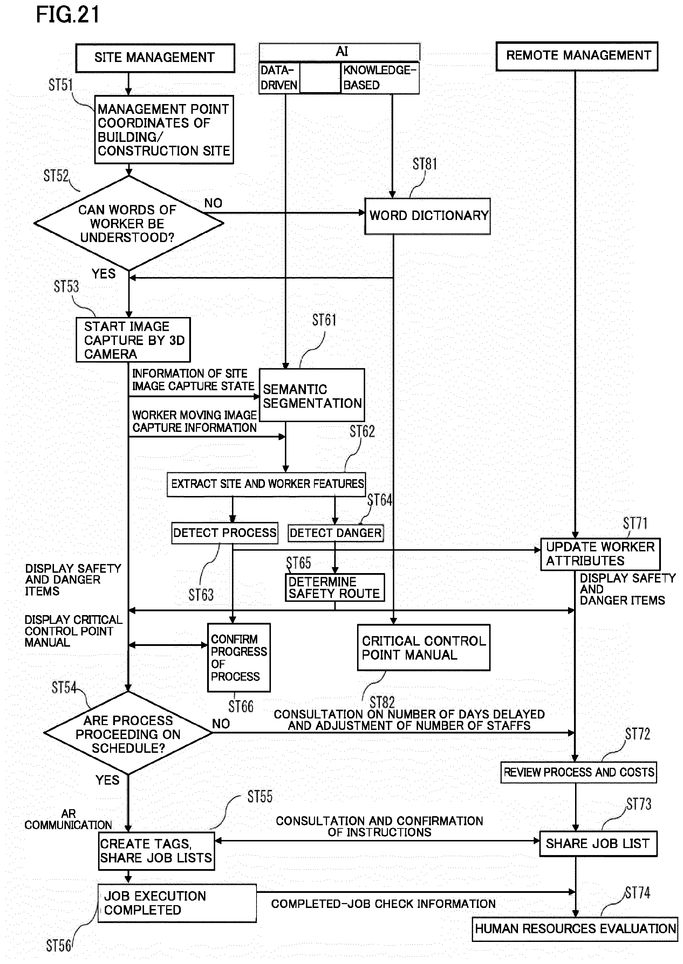

As shown in Fig. 18, accumulating movement paths of feature points of multiple workers enables a safer carry-in route to be detected. Also, as shown in Fig. 19, such an arrangement is capable of predicting the process for m minutes later based on the working speed calculated based on the movement path of the feature points. This prediction is performed by the work speed determining module in Fig. 2, and is stored in the attribute information database as an index that indicates the capabilities of the workers. Also, as shown in Fig. 20, the semantic segmentation judges the input images or the like in a state in which a learning model has been created by learning using the semantic segmentation beforehand. This enables process detection and danger detection as described later with reference to Fig. 21. As described above, the semantic segmentation plays an important role, especially for a driven-type AI. Also, in addition to the judgement as described above, the semantic segmentation provides an important role for the learning process. Accordingly, in order to raise the accuracy of judgments, instead of an arrangement in which judgment is made using a model created beforehand, an arrangement may be made in which the learning is continued in parallel with the judgment.

Fig. 21 is a diagram showing a processing flow of the overall system of the management system shown in Fig. 2.

On the site management side, in Step ST51, management point coordinates of the building/construction site are confirmed so as to create reference points to be used for subsequent processing based on position. Also, in order to provide smooth communication with workers, which is indispensable at a site, in Step ST52, the understanding level of the worker's words is checked. In a case in which the understanding is not sufficient, in Step ST81, the word dictionary is used as a reference using a function of the knowledge-based AI. After the preparations have been made, in Step ST53, 3D camera image capturing is started. However, these three preparation tasks do not necessarily have to be performed in this order, and may be repeated as necessary. The image-captured data obtained in step ST53 is used for process detection and danger detection. First, in step ST61, region division of the building/construction site is performed using the semantic segmentation function of the data-driven AI (see Fig. 20), which is used for both process detection and danger detection. That is to say, in the process detection, the area of the work object region such as walls, floors, and so forth is acquired based on the results of region division. In Step ST62, site features are acquired directing attention to the amount of change thereof with respect to time, thereby estimating the degree of progress. Also, in Step ST62, the behavior of the workers is analyzed. The analysis results are extracted as the worker features (see Fig. 13). With this, the degree of progress of the work is estimated based on the movements and positions of the workers. In Step ST71, as shown in Fig. 19, the results are written to a worker attribute information database at all times. With this, in Step ST63, process detection is performed based on both the state of the site and the behavior of the workers. Furthermore, the results thus obtained are checked with reference to the critical control point manual in Step ST82 which is one of the knowledge-based AI functions (see step ST66). Subsequently, the results are displayed on the site management side as critical control points to keep under control on the site (see Fig. 6).

Returning to step ST62, the extracted worker features are also used for danger detection in step ST64. Humans use the five senses to try to handle situations at hand. At building/construction sites, workers are often sensitive to oncoming dangers regarding which perception by current-level sensor technology is difficult or costly, and take evasive action. Changes in behavior or actions, such as, for example, crouching, tripping, jumping over, stopping on perceiving a smell, changing the speed of movement on hearing a sound, and so forth, are often observed at sites, and these can be useful information for danger detection. In step ST64, relative positions of feature points (bounding boxes of the head or entire body in the drawings), and temporal changes and feature amounts (relative positions and temporal changes found from the figure and ground in the drawings) of workers, described with reference to Figs. 13, 14, 15, 16, and 17, are used to recognize irregular behavior of workers, and danger detection is performed based on the results thus recognized. The results thereof are automatically notified as danger item candidates. In Steps ST55 and ST73 using AR communication described later, confirmation work is performed between the site manager and the remote manager so as to create a job list for handling the danger items. Also, in Step ST65, statistical processing is performed for the movement history of workers based on feature point tracking results so as to determine a safe passage at the site (see Fig. 16). Such safety/danger items are displayed for both the site manager and the remote manager, and are shared between them.

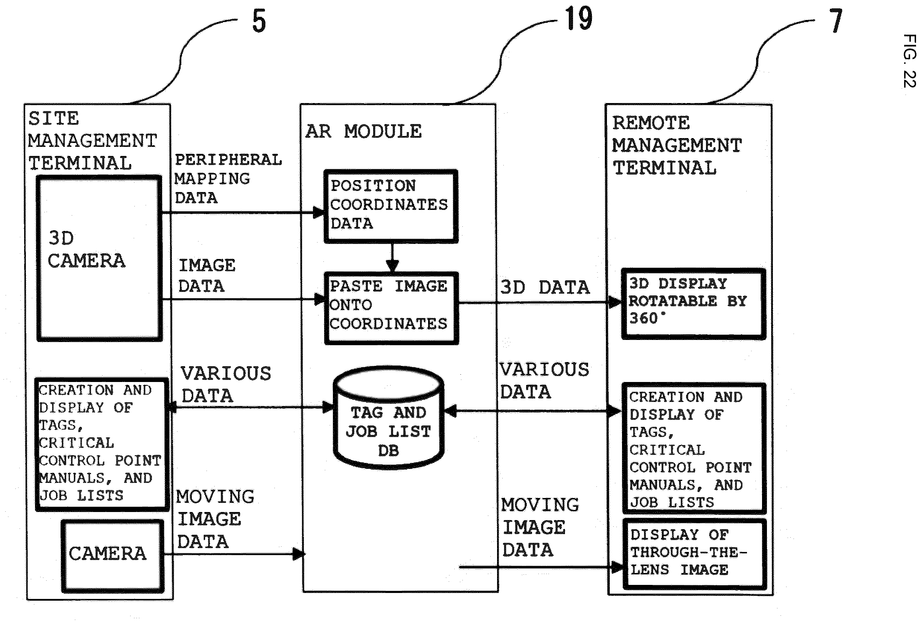

In Step ST54, by comprehensively monitoring process progress (step ST66), critical control points (step ST82), and safety/danger items (step ST65), the site management side checks whether or not processes are proceeding on schedule. When not on schedule, processes and costs need to be reviewed in step ST72 on the remote manager side. Communication between the site manager side and the remote manager side is performed by AR communication as in Steps ST55 and ST73. Specifically, the processes, danger items, critical control points, and other caution items and so forth for the site are basically indicated or shared through tags and job lists provided by the function of AR communication, as shown in Fig. 2. Also, the function of AR communication that links the site management side and the remote manager side is provided as shown in Fig. 22. The tags and job lists allow both the site management terminal and the remote management terminal to perform collaborative work at all times through 3D-format, bidirectional dialogue, as described later. As described above, problems that need to be solved on-site are written to the job server (virtual tags) 9 shown in Fig. 1. In Step ST56, the state of solving/resolving these problems is reported. This becomes information for measuring the management capabilities of the site manager. Specifically, in Step ST74 on the remote management side, this information is associated with human resources evaluation of the site manager.

It should be noted that description has been made with reference to Fig. 21 regarding processing on the site management side, processing on the AI side, and processing on the remote management side. However, the side on which the distributed processing is performed is not restricted in particular. All or part of the AI-side processing may be included in the site management side, or may be included in the remote management side.

Fig. 22 is a block diagram for explaining communication functions with respect to the AR module shown in Fig. 2.

Brief description will be made with reference to Fig. 22 regarding the AR communication. An AR module 19 supports mutual communication between the site management terminal 5 and the remote management terminal 7. The AR module 19 receives peripheral mapping data acquired by the 3D camera from the site management terminal 5, and acquires position coordinate data. The AR module 19 pastes image data sent from the 3D camera onto coordinates of the position coordinate data, and sends this data to the remote management terminal 7. With this, the remote management terminal 7 is capable of providing 3D display, and is capable of providing 360° rotation display. Also, the tag and job list DB of the AR module 19 allows tags, critical control point manuals, and job lists to be created and displayed by the site management terminal 5 or the remote management terminal 7 and the AR module 19. Furthermore, moving image data captured by the camera of the site management terminal 5 is sent to the remote management terminal 7 via the AR module 19, so as to allow the remote management terminal 7 to provide through-the-lens image display.

As can be understood from the contents described above, the kinds of dangers that need to be managed as management items, handling methods thereof, and so forth, are overlaid on images of the site in the form of movable tags so as to provide description thereof. This enables sufficient communication to be realized between site managers with little experience and remote managers who are highly experienced managers. This enables appropriate personnel evaluation. In addition, such an arrangement can be expected to enable personnel training of site managers to be performed. Furthermore, in addition to personnel training of site managers, in some cases, learning is also possible for the remote managers on the instructing side. From this viewpoint, this can be expected to have an advantage of personnel training. Moreover, a situation in which the site manager is appropriately evaluated and gains experience as a human resource means that the workers at the site are appropriately fulfilling their own authority and responsibility. This leads to a better situation for the site. In addition to appropriate evaluation of workers, this also leads to training of personnel. That is to say, this can be expected to allow skills to be passed down on both the manager side and the worker side.

It should be noted that description has been made in the embodiment with reference to an application for a building site. Also, the present invention may be applied to construction sites and manufacturing sites, regardless of whether they are inside or outside a factory. Also, the present invention may be applied to sites in other fields.

Also, description has been made in the embodiment regarding an arrangement in which data-driven AI employs deep learning using machine learning of image analysis. The method for such analysis is not restricted to handling in a black-box manner. Also, the analysis results may be probabilistically acquired by mathematical calculation.

### Reference Signs List

1:management system
5:site management terminal
7:remote management terminal

## Claims

1. A management system configured to identify a management item to be managed in a space through which a plurality of workers move, and to report the management item to a manager that manages a situation in the space, the management system comprising:
a tracking unit configured to detect a position of a feature point to be used to identify a behavior of each of the plurality of workers, and to track a change in the position;
a storage unit configured to convert the change in position of the feature point tracked by the tracking unit into behavior of each of the plurality of workers, and to store it as behavior information for learning data to be used by machine learning;
an identifying unit configured to judge whether or not the change in position of the feature point tracked by the tracking unit is due to irregular behavior of a worker, based on the behavior information stored by the storage unit, and to identify the management item; and
a reporting unit configured to display the management item identified by the identifying unit on a map representing the space, so as to report the management item to the manager.

2. The management system according to Claim 1, wherein personal information of each of the workers is associated with the feature points.

3. The management system according to Claim 1 or 2,
wherein the manager includes both a site manager who is in the space where the plurality of workers are, and a remote manager who is away from the space,
and wherein the reporting unit shows the management item to both the site manager and the remote manager so as to report to them.

4. The management system according to Claim 3, wherein the management item to be managed is tagged under agreement by the site manager and the remote manager, and the tag thus applied can be deleted under agreement by the site manager and the remote manager,
and wherein the management system further comprises a sharing unit that allows the site manager and the remote manager to share management index information indicating a management index expressed by a number of tags thus applied, a number of tags thus deleted, or an increase/decrease in the tags.

5. An evaluation system comprising:
the management system according to Claim 4; and
an evaluating unit configured to evaluate the plurality of workers and the site manager based on comparison between actual actions and standard actions required by a standard process.

6. A personnel training method provided with the evaluation system according to Claim 5, configured to support training through bridging a gap in experience between each of the plurality of workers and the site manager.
